# EUROPEAN PATENT APPLICATION

(11) **EP 1 251 515 A1**
(43) Date of publication of application: **23.10.2002**
(21) Application number: 01201422.1
(22) Date of filing: 19.04.2001
(51) Int. Cl.: G11B 27/10, G11B 27/28, G11B 27/34, G06F 17/30, H04N 5/765

(54) **Method and system for selecting a position in an image sequence**

(71) Applicant: Koninklijke Philips Electronics N.V., 5621 BA Eindhoven (NL)
(72) Inventor: The designation of the inventor has not yet been filed
(74) Representative: Gravendeel, Cornelis

(57) **Abstract**

Method and system for selecting a position in an image sequence. A temporally ordered collection (300) of key frames is obtained for the image sequence, preferably through automatic key frame extraction. A portion of the collection is displayed in a scroll area (201). A current key frame (303), being a key frame presently occupying a playback area (212) can be actuated to initiate playback of the image sequence at the location corresponding to the current key frame. Upon actuation of a next key frame (304), presently occupying the forward area (213), the collection of key frames is scrolled through the scroll area (201) in a forward direction, and upon actuation of a previous key frame (302), presently occupying the backward area (211), the collection of key frames is scrolled through the scroll area (201) in a backward direction.

## Description

The invention relates to a method of selecting a position in an image sequence.

The invention further relates to a system for selecting a position in an image sequence.

When watching an image sequence, such as a video stream, it is often desirable to be able to navigate to a specific position in the image sequence. This allows the viewer to skip the uninteresting parts of the sequence, or to repeat very interesting parts. Conventional video playback systems are provided to this end with fast forward and fast backward buttons, which allow the user to increase the speed in either the forward or the backward direction.

Alternatively, some video on demand systems include fast forward and fast reverse streams, referred to as trick play streams, for each movie. When the user desires to fast forward or fast reverse in a movie, he selects the fast forward or fast reverse option, and the respective fast forward or fast reverse trick play stream is then transferred to the user in the appropriate points where the user was watching, instead of the normal play stream. This way a fast forward or fast reverse version of the movie being watched is simulated.

The user can be provided with feedback on the current position in the image sequence by means of key frames. Key frames are frames that are representative of a portion of the image sequence. For example, the first frame of a new scene in a video stream may serve as a key frame representative of that scene. A sequence of key frames thus provides an overview of the image sequence. When the user presses the fast forward or fast backward button on his remote control, a collection of key frames for the image sequence is scrolled over the display. When a key frame representative of a desired position in the image sequence appears, the user can press the play button on his remote control, and then the system start playback of the image sequence at a point in the sequence represented by the desired key frame.

However, this procedure means that the user has to transfer his view from the screen, where he watches the key frames being scrolled by, and his remote control, with which he can control the scrolling key frames. But when the user is looking at his remote control, the desired key frame may scroll by and disappear out of his view before the he has a chance to look back at the display. Further, this method is not intuitive. A collection of key frames scrolling by on the screen offers new possibilities for direct interaction with the image sequence. These possibilities should be exploited to the benefit of the user.

It is an object of the invention to provide a method according to the preamble, which is more intuitive than the known method.

This object is achieved according to the invention in a method comprising
- obtaining a temporally ordered collection of key frames for the image sequence,
- displaying in a scroll area a portion of the collection, the scroll area comprising a playback area, a forward area and a backward area,
- upon actuation of a current key frame from the collection, being a key frame presently occupying the playback area, selecting the position in the image sequence as a position represented by the current key frame,
- upon actuation of a next key frame from the collection, being a key frame presently occupying the forward area, scrolling the collection through the scroll area in a forward direction at a first speed, and
- upon actuation of a previous key frame from the collection, being a key frame presently occupying the backward area, scrolling the collection through the scroll area in a backward direction at a second speed.

Using this method, the user can directly operate on the key frames as they appear in the scroll area, and he does not need to switch between his remote control and the display. When he sees the desired key frame appear in the playback area, he can simply actuate that key frame and then the position in the image sequence will be selected as a position represented by the current key frame. Playback of the image sequence may in an embodiment start at a point in the sequence represented by the current key frame.

Further, the forward and backward areas provide an intuitive way to initiate scrolling of the key frames through the scroll area. The next key frame, presently occupying the forward area, corresponds to a point in the video stream that lies in the future with respect to the current key frame. So, intuitively, actuating the next key frame should move the present position in the image sequence into the future, or in other words, the collection of key frames should be scrolled in a forward direction. The same goes for the previous key frame. The scrolling speeds in the forward and backward directions may differ or be the same.

In an embodiment the scroll area further comprises a fast forward area, the method further comprising, upon actuation of a further next key frame from the collection, being a key frame presently occupying the fast forward area, scrolling the collection through the scroll area in the forward direction at a third speed higher than the first speed.

In a further embodiment the scroll area further comprises a fast backward area, the method further comprising, upon actuation of a further previous key frame from the collection, being a key frame presently occupying the fast backward area, scrolling the collection through the scroll area in the backward direction at a fourth speed, higher than the second speed.

Sometimes it is desirable to be able to scroll forward or backward at a higher speed than the "normal" scrolling speed. According to these two embodiments, there may further be provided a fast forward area or a fast backward area. Actuating a key frame presently occupying one of said areas results in a scrolling at a higher speed then the first or second speed. It is not necessary to provide both the fast forward area and the fast backward area at the same time. Often, the user starts at the beginning of the image sequence, and is looking for a position which is located further along in the image sequence. In such a case, he needs more context in the forward direction than in the backward direction, and often wants to go forward at a faster speed than the speed at which he wants to go backward. Most of the time in such a case, when going backward it is because the user missed the desired key frame and needs to back up a little.

In a further embodiment playback of the image sequence is started, upon selection of a key frame presently occupying one of the backward area and the forward area, at a point in the sequence represented by the selected key frame. It is not always practical to have to actuate the current key frame in order to start playback. When a key frame representing the desired position is shown in the backward or forward area, the user might want to select that key frame and have playback start at that location. This selecting could be effected, for example, by highlighting the desired key frame and pressing a "play" button on a remote control, or by double-clicking on the desired key frame.

In a further embodiment the current key frame is displayed in a substantially full screen fashion. Key frames are typically shown at a reduced size, especially when plural key frames are shown at one time. Because it is reduced in size, it may be hard for the viewer to identify details. It is therefore advantageous that he be able to view the current key frame at a substantially full screen resolution. The display need not be completely full screen, as it may desirable to maintain the scroll area on screen as well. Of course, the presentation of the key frames can also overlap the current key frame displayed in a full-screen fashion.

In a further embodiment the image sequence constitutes a video stream. Selecting a position in a video stream is particularly difficult because of the average length of video streams, and so the method according to the invention is especially advantageous when the image sequence constitutes a video stream.

In a further embodiment the connection of key frames is obtained by automatically generating plural key frames from the video stream. For video streams, which are typically very large, it is difficult and cumbersome to manually generate a collection of key frames representative of the video stream. Various techniques to automatically identify and extract key frames from a video stream have been developed and are known in the art. By using such a technique to obtain the collection of key frames, the method according to the invention can be used with any video stream, even when no key frames have been identified in advance.

It is a further object of the invention to provide a system according to the preamble, which operates in a more intuitive manner than the known system.

This object is achieved according to the invention in a system comprising
- sequencing means for obtaining a temporally ordered collection of key frames for the image sequence,
- display means for displaying in a scroll area a portion of the collection, the scroll area comprising a playback area, a forward area and a backward area,
- current key frame selecting means for upon actuation of a current key frame from the collection, being a key frame presently occupying the playback area, selecting the position in the image sequence as the current key frame, and
- scrolling means for upon actuation of a next key frame from the collection, being a key frame presently occupying the forward area, scrolling the collection through the scroll area in a forward direction at a first speed, and for upon actuation of a previous key frame from the collection, being a key frame presently occupying the backward area, scrolling the collection through the scroll area in a backward direction at a second speed.

The invention further relates to a computer program product enabling a programmable device to function as a system according to the invention.

These and other aspects of the invention will be apparent from and elucidated with reference to the embodiments shown in the drawing, in which:
Figure 1 schematically shows a television receiver comprising a system according to the invention;
Figure 2 schematically shows an embodiment of the display of the television receiver during operation of the system according to the invention; and
Figures 3A-E schematically illustrate operation of the system according to the invention.

Throughout the figures, same reference numerals indicate similar or corresponding features. Some of the features indicated in the drawings are typically implemented in software, and as such represent software entities, such as software modules or objects.

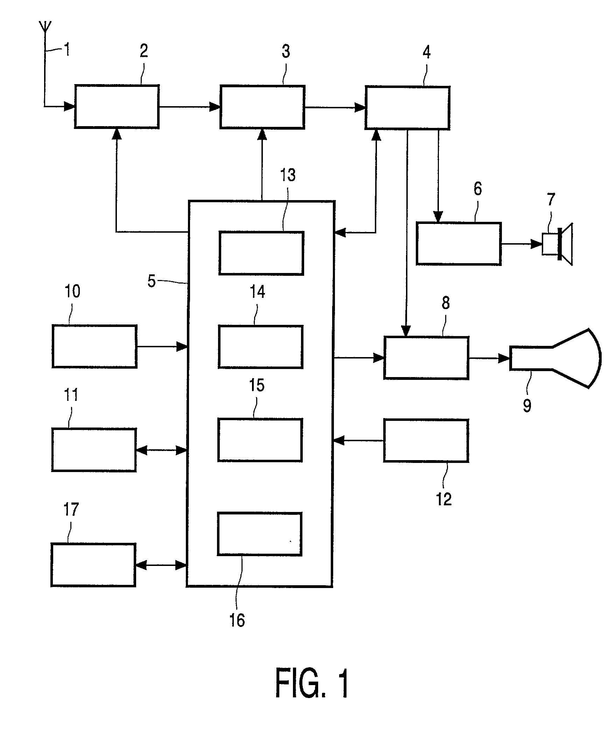

Figure 1 schematically shows a television receiver comprising a system according to the invention. Digital broadcast streams, modulated upon radio frequency (RF) signals, are received from the ether by an antenna 1, or, alternatively, from a cable network. The broadcast streams may be formatted, for example, in accordance with the Digital Video Broadcasting (DVB) standard. A tuner 2 comprises a standard analog RF receiving device which is capable of receiving said RF signals and selecting one of them to be output to a demodulator 3. Which signal the tuner 2 is depending upon control data received from a central processing unit (CPU) 5. The demodulator 3 converts the analog signal into a digital packet stream, based on the control signals received from the CPU 5. This packet stream is then output to a demultiplexer 4, which selects packets belonging to a particular program in accordance with control data received from the CPU 5, and decomposes the packet stream into elementary audio, video or data streams. While the system will be discussed below with reference to a video stream, any sequence of images in general can be used as well.

In addition to broadcast signals, the television receiver may be adapted to receive signals from other sources too, for example, from a (digital) video recorder or DVD player, from the Internet, or from a digital subscriber line. Programs and program attributes need not be obtained from the same source. For example, attribute and attribute values relating to broadcast programs may be obtained from an Internet site.

A video processor 8 decodes the video stream received from the demultiplexer 4 or from the CPU 5. Decoded video data is then transmitted to a display screen 9. An audio processor 6 decodes the audio stream received from the demultiplexer 4. Decoded audio data is then transmitted to a speaker system 7.

The demultiplexer 4 outputs the elementary data stream to the CPU 5. The elementary data stream has two types of data: control data and content data. Content refers to, for example, interactive programs; control refers to tables in the multiplex which specify matters like the structure of the multiplex, the (RF) frequencies at which the channels are modulated, and the addresses at which the various content components and the (other) tables in the multiplex can be found. The CPU 5 comprises one or more microprocessors capable of executing program instructions stored in a read-only memory (ROM) 12. Alternatively, program instructions may be stored in a random-access memory such as a hard disk. These program instructions comprise parts of software modules including, inter alia, a command module 13, and a preference profile module 14. Data processed by said software modules, e.g. DVB-SI data and preference profile information, may be stored in a non-volatile memory 11. The command module 13 is capable of controlling functions of the television receiver, like tuning and demultiplexing a selection, and transmitting data to the video processor 8 to be presented on the screen 9.

A user command unit 10 receives user commands, e.g. through a remote control (not shown), and transmits them to the command module 13 to be processed. For example, when the user enters a channel number, the command module 13 controls the tuner 2 and the demultiplexer 4 to select the corresponding broadcast stream and data packets therein, and sends graphical data to the video processor 8 to present feedback on the screen 9, e.g. the present number, the channel name being displayed for a few seconds.

The preference profile module 14 interprets the program attributes, for example received as DVB-SI data from the demultiplexer 4 to collect information about the channels, or "services" in DVB terminology, which are available in the received broadcast streams and about the programs, or "events" in DVB terminology, which are scheduled for those channels. The preference profile module 14 may be arranged to learn from the user's viewing behavior. For example, the preference profile module 14 could receive the commands from the command module 13 and determine from that which programs the user finds interesting. The preference profile module 14 records the user's preferences and interest in a preference profile for a user. The preference profile module 14 may maintain a collection of preference profiles.

A sequencing module 15 obtains a temporally ordered collection of key frames for the video stream. Key frames are frames that are representatives of a portion of the image sequence. For example, the first frame of a new scene in a video stream may serve as a key frame representative of that scene. Alternatively, representative images can be created manually rather than being chosen as images from the image sequence.

For some video streams, e.g. a DVD, there is provided together with the video stream a collection of key frames for that video stream. The collection is then readily available. However, often this will not be the case and even when this is the case, the number of key frames in such a sequence will be very limited and so will be of little use in the method according to the invention.

Therefore, preferably the sequencing module 15 automatically generates the collection of key frames by automatically detecting plural representative key frames from the video stream. By analyzing the frames that comprise the video stream, frames representing significant streams can be detected and selected. A frame that is representative of such a scene can then be identified as a key frame and added to the collection. Two suitable techniques for this purpose are disclosed in International Patent Application WO 98/55942 (Attorney Docket PHA 23253) and International Patent Application WO 98/55943 (Attorney Docket PHA 23252), respectively.

WO 98/55942 discloses a video indexing system which analyzes contents of source video and develops a visual table of contents using selected images. The source video is analyzed to detect video cuts from one scene to another, and static scenes. Key frames are selected for each significant scene. A key frame filtering process filters out less desired frames including, for example, unicolor frames, or those frames having a same object as a primary focus or one of the primary focuses. A visual index is created from those frames remaining after the key frame filtering and stored for retrieval.

WO 98/55943 discloses a system for detecting significant scenes which detects video cuts from one scene to another, and static scenes based on DCT coefficients and macroblocks. A key frame filtering process filters out less desired frames including, for example, unicolor frames, or those frames having a same object as a primary focus or one primary focuses.

Other suitable techniques for automatically extracting key frames from a video stream are also known in the art and can easily be used in the invention. The key frames are temporally ordered, that is, if a first key frame occurs later in the collection than a second key frame, then the first key frame also occurs later in the image sequence than the second key frame.

The sequencing module 15 feeds the collection of key frames to a scroller module 16, which can scrollably present the collection on the display 9. Typically, the scroller module 16 selects a portion from the collection and feeds that to the video processor 8, which processes it for display on the display 9.

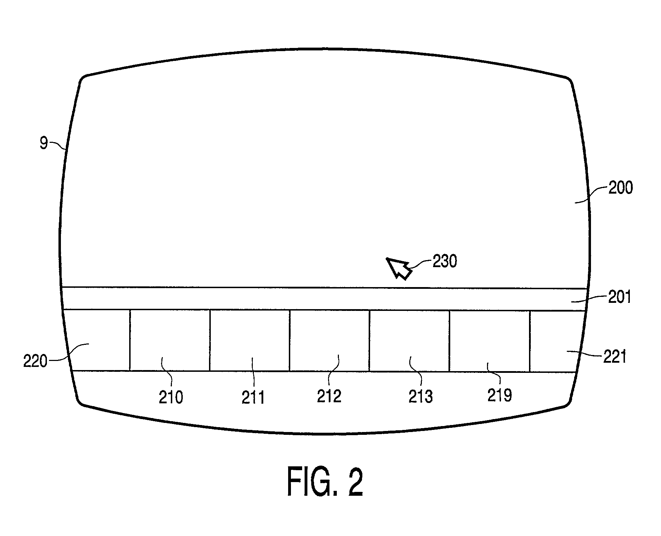

Figure 2 schematically shows an embodiment of the display 9 of the television receiver in more detail. The display 9 comprises a display area 200 and a scroll area 201. During normal operation, the display area 200 occupies the entire screen of the display 9, so that in the display area 200 the video stream can be presented to the user. When the user gives an appropriate command, for example by pressing a button on his remote control, the scroll area 201 appears. The scroll area 201 may appear in a partially transparent fashion, so that portions of the display area 200 that would otherwise be obscured, can still be presented.

The scroll area 201 is divided into several other areas. The scroll area 201 at least comprises a backward area 211, a playback area 212, and a forward area 213, preferably arranged adjacent to each other in this order. Additionally, there may be provided a fast backward area 210, and a fast forward area 214. There may also be a start area 220 and end area 221. Preferably, all the provided areas 210-214, 220, 221 are arranged adjacent to each other in the form of a strip, as shown in Figure 2.

The scroller module 16 scrollably presents the collection of key frames on the display 9 in the scroll area 201. Some of the presented key frames will occupy some of the areas 210-214. When the collection is scrolled through the scroll area 201, the key frames presently occupying one of said areas 210-214 will change.

In order to clarify the invention, the following definitions will be used. The key frame presently occupying the playback area 212 will be referred to as the current key frame. The key frame presently occupying the forward area 213 will be referred to as the next key frame. The key frame presently occupying the backward area 211 will be referred to as the previous key frame.

In embodiments in which the scroll area 201 further comprises the fast backward area 210 and/or the fast forward area 214, the key frame presently occupying the fast backward area 210 will be referred to as the further previous key frame. The key frame presently occupying the fast forward area 214 will be referred to as the further next key frame.

It may be advantageous to display below the displayed portion of the collection a representation of the video stream as a horizontal bar. The horizontal bar can be colored, or indicated in other ways. On this horizontal bar, there is then shown an indicator of a present position in the video stream. The horizontal bar may be further enhanced with indications of the length of the video stream being represented, for example by displaying the total length of the video stream at the right of the bar, or by providing a time scale below the bar. This provides the user with an indication of the current location in the video stream. As the collection of key frames scrolls, the indicator moves along the horizontal bar to show the position in the video stream represented by the current key frame.

The key frames occupying said areas are displayed user-actuably. There is provided a pointer 230 on the display 9, which can be moved by the user. The user's remote control could be provided with forward and backward buttons, a four-way cursor, a jog shuttle, a scroll wheel, a laser pointer or some other input mechanism to indicate the direction(s) in which the pointer 230 is to be moved. Alternatively, the user command unit 10 may be arranged to receive input through a voice command, and the pointer 230 can be configured to be moved over the screen 9 in response to the appropriate voice commands. If the system according to the invention is embodied on a computer system, an input device such as a mouse or cursor keys on a keyboard may be used to position the pointer 230 on the display 9.

While the pointer 230 is shown in Figure 2 as an arrow, the pointer 230 can of course be of any shape. In particular, it may be advantageous to embody the pointer 230 as a crosshair cursor, which the user can move along the screen 9. The concept and implementation of a crosshair as cursor or pointer on the screen of a television is known from International Patent Application WO 00/48395 (Attorney Docket PHN 17361) by the same applicant as the present application.

Positioning the pointer 230 over a key frame occupying one of the areas 210-214 may be considered to be an actuation of that key frame. However, in some systems, especially computer systems, it is conventional to request some extra user action, such as a click with a button on a mouse, to confirm that the key frame over which the pointer 230 is positioned is the one to be actuated. In television systems on the other hand, positioning the pointer 230 over the key frame may be considered sufficient as an actuating action.

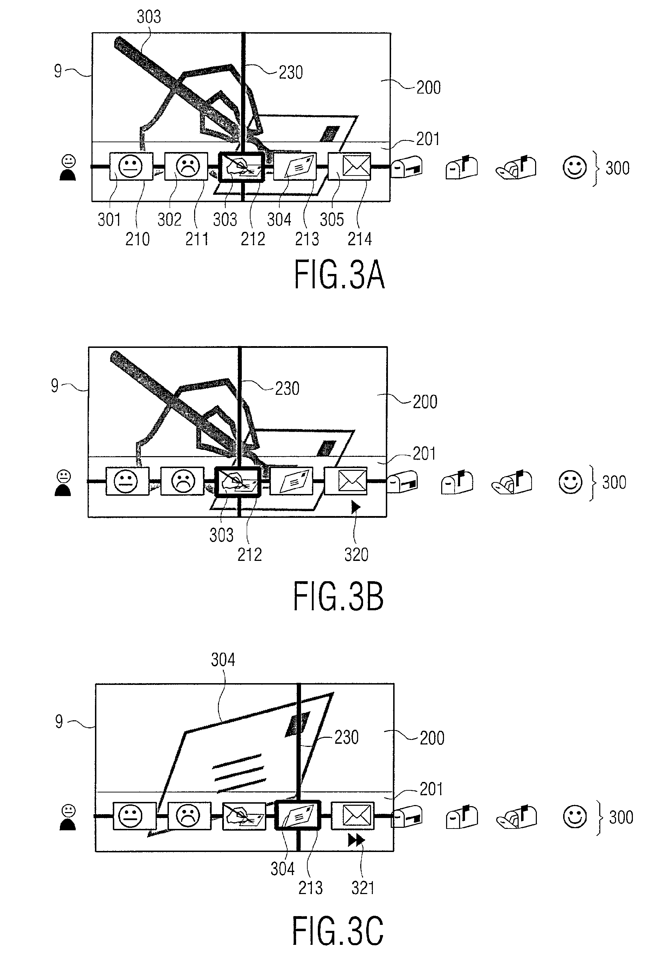

The operation of the system according to the invention will now be illustrated with reference to Figures 3A-E, which show the display 9 in more detail during various modes of operation.

In these figures, a crosshair-like cursor is used. The user can actuate a key frame in one of the areas 210-214 by simply moving the crosshair over the key frame in question. The crosshair cursor 230 is shown as a horizontal and vertical stripe, whose intersection is indicated as a highlighted black rectangle.

In this embodiment, a collection of key frames 300 has been previously obtained. The collection 300 is scrollably displayed in the scroll area 201. As explained above, some of the presented key frames will occupy some of the areas 210-214. Shown are key frame 301 occupying area 210, key frame 302 occupying area 211, key frame 303 occupying area 212, key frame 304 occupying area 213, and key frame 305 occupying area 214. This makes key frame 301 the further previous key frame, key frame 302 the previous key frame, key frame 303 the current key frame, key frame 304 the next key frame and key frame 305 the further next key frame.

The scroller module 16 is activated upon actuation of one of the key frames 301-305 in one of the areas 210-214. The action taken by the scroller module 16 depends on the key frame being actuated.

Figure 3A shows the output on the display 9 in a 'pause' mode of operation. The current key frame 303 is being actuated due to the crosshair cursor 230 being positioned over it. The current key frame 303 is then presented in the display area 200 in a substantially full-screen fashion. Note that here the scroll area 201 is superimposed over the display area 200, and unused areas of the scroll area 201 are presented in a transparent fashion. This way, parts of the substantially full-screen presentation of the current key frame 303 also appear in the scroll area 201.

Upon actuation of the current key frame 303, the position in the video stream where playback is to be started is selected as a position represented by the current key frame 303. If the current key frame 303 is actually a frame from the video stream, then playback can start at the location in which the current key frame 303 occurs in the video stream. If the current key frame 303 does not occur as such in the video stream, then a determination needs to be made as to which location in the video stream the current key frame 303 is representative for.

Playback of the video stream may be started automatically upon actuation of the current key frame 303. In this embodiment, however, a further actuation of the current key frame 303 is necessary to start playback. If the video stream was already played back when the scroll area 201 appeared on the screen, then actuation of the current key frame 303 stops the playback of the video stream.

Figure 3B shows the output on the display 9 in a 'playback' mode of operation. When the crosshair cursor 230 remains in the same position over the current key frame 303 for a certain time, say three seconds, the system goes from the 'pause' mode to the 'playback' mode. This is indicated by the appearance of a 'playback' icon 320 in the lower right corner of the display 9. In this mode, the video stream is being played back in a substantially full-screen fashion, starting at a position represented by the current key frame 303.

During playback, the scroller module 16 may simultaneously scroll the collection of key frames 300 through the scroll area 201 at a speed in proportion with the normal playback speed of the video stream. This way, the scroller module 16 ensures that the current key frame 303 is updated whenever a new key frame occurring in the video stream is presented on the display 9. The current key frame 303 then always is representative of the scene or portion of the video stream being presently displayed on the display 9.

The user can move the crosshair cursor 230 away from the current key frame 303 and back again to return the system to the 'pause' mode of operation, or move the crosshair cursor 230 to another key frame being presently displayed to switch the system to another mode of operation.

Playback of the video stream may be restricted to playing only a segment of the video stream, that will end at the location in the video stream represented by the next key frame 304.

Figure 3C shows the output on the display 9 in a 'scroll forward' mode of operation. Moving the crosshair cursor 230 over the next key frame 304 actuates the next key frame 304. Upon actuation of the next key frame 304, the scroller module 16 scrolls the collection 300 through the scroll area 201 in a forward direction at a first speed. The key frames appearing in the areas 210-214 are then updated. This forward scrolling operation is indicated by the appearance of a "scroll forward" icon 321 in the lower right corner of the display 9.

Playback of the video stream is suspended until the user uses the crosshair cursor 230 to actuate the current key frame 303 so as to switch the system to the 'pause' mode of operation.

During the scrolling in the forward direction, the next key frame 304 is displayed in a substantially full-screen fashion in the display area 200. Displaying in this fashion gives the user a better look at the key frames during the scrolling operation, even at a distance. This is especially useful when the system according to the invention is embodied in a television receiver, since then the user will often be located a few meters from the television receiver, making it difficult for him to look at the key frames in the scroll area 201. These key frames are often presented in a reduced size, to fit them all together in the scroll area 201.

If the user recognizes the next key frame 304 as a desired key frame, he can move the crosshair cursor 230 to the location of the current key frame 303 so as to actuate it, which switches the system to the 'pause' or 'playback' mode of operation. Recognizing the key frame and moving the crosshair cursor 230 thereto takes some time. By the time the current key frame 303 has been actuated, the scroller module 16 will have scrolled the collection further. This means that the current key frame 303 then is the desired key frame, and so playback can start at the desired location.

Alternatively, the current key frame 303 may be displayed instead in the display area 200. The choice depends on how fast the user is expected to operate the crosshair cursor 230.

In a manner similar to the one described above, the system switches to a 'scroll backward' mode of operation upon actuation of the previous key frame 302. In that mode, the scroller module 16 scrolls the collection 300 through the scroll area 201 in a backward direction at a second speed. Using the previous and next key frames in this fashion achieves that the user does not need to operate any special forward and backward buttons on his remote control. He can simply select the previous or next key frame to scroll in the appropriate direction.

The speed at which the collection is scrolled through the scroll area 201 can be, for example, one frame per second. While usually the first speed and the second speed will be the same, in some cases it may be better to scroll forward at a speed faster than the second speed, because in many cases users start at the beginning of the video stream, looking for a position in the video stream that lies in the forward direction so a relatively fast forward scrolling speed is desired. However, if the desired position in the video stream then appears and subsequently scrolls out of the scroll area 201 before the user can actuate it, then it is desirable to scroll backward at a slower speed to find it again.

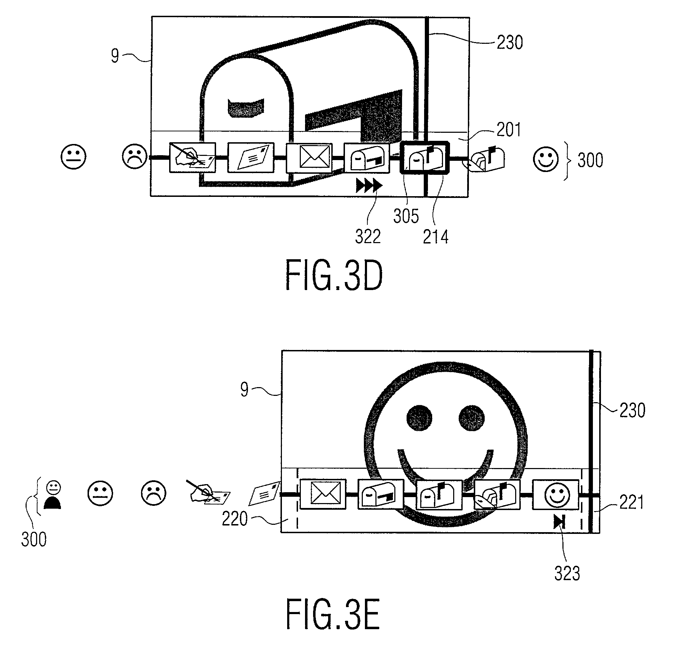

Figure 3D shows the output on the display 9 in a 'fast forward' mode of operation. Moving the crosshair cursor 230 over the further next key frame 305 actuates the further next key frame 304. Upon actuation of the further next key frame, the scroller module 16 scrolls the collection through the scroll area 201 in the forward direction at a third speed higher than the first speed. The effect of actuating the further next key frame 305 is the same as actuating the next key frame 304, except in that the scrolling speed is now higher, allowing for faster browsing through the key frames from the collection. This is symbolized by the appearance of a "fast forward" icon 322 in the lower right corner of the display 9.

Similarly, actuation of the further previous key frame 301 causes the scroller module 16 to scroll the collection through the scroll area 201 in the backward direction at a fourth speed higher than the second speed. The third and fourth speeds may be, for instance, three frames per second. This way, the further next key frame and the further previous key frame act as fast forward and fast backward buttons. The user can now quickly navigate to the approximate position of the desired key frame using the further previous and further next key frames, and then pinpoint the location using the previous and next key frames. If the desired key frame then appears in the playback area 212, he can actuate the current key frame 303 and initiate playback at the desired position.

In order to illustrate the scrolling process, it is to be noted that the displayed portion of the collection 300 in Figure 3D differs from the displayed portion in Figure 3C. The further next key frame 305 is now a different key frame than the further next key frame 305 in Figure 3C.

The scroller module 16 may stop scrolling the collection through the scroll area 201 after a certain number of frames have been scrolled through the scroll area 201, or after a certain interval has elapsed. This way, it is achieved that if the user is interrupted, the scrolling of the key frames through the scroll area 201 is ended automatically. The user then needs to actuate on of the key frames in one of the areas 210-214 again to continue.

Figure 3E shows the output on the display 9 in a 'jump to end' mode of operation. To allow the user to quickly jump to the beginning or end of the video stream, the start area 220 and the end area 221 are provided. The system switches to the 'jump to end' mode upon actuation of the end area 221, which causes the scroller module 16 to scroll the collection substantially instantaneously to the end. Similarly, the system switches to a 'jump to start' mode upon actuation of the start area 220, which causes the scroller module 16 to scroll the collection substantially instantaneously to the beginning. So, if the desired position is located near the end of the video stream, the user can simply actuate the end area 221 and then use the previous key frame or the further previous key frame to scroll backward to the desired position.

The jump to end operation is symbolized by the appearance of a "jump to end" icon 323 in the lower right corner of the display 9. In Figure 3E, the crosshair cursor 230 has been moved to the end area 221 so as to actuate the end area 221. The displayed portion of the collection 300 comprises the last five key frames from the collection 300, so, as displayed, the scroller module 16 has already scrolled the collection 300 to the end.

The last key frame from the collection may then be presented in either the fast forward area 214 or in the playback area 212. While it may seen more logical to present the last key frame in the playback area 212, this would mean that the forward area 213 and the fast forward area 214 are presented empty, which may be confusing to the user. It should be made clear to him that the current key frame 303 then is the last key frame from the collection 300 and that he cannot scroll forward any further.

In an embodiment the user can select any one of the key frames presently occupying one of the areas 210-214. When a key frame representing the desired position is scrolling by, the user might want to directly select that key frame and have playback start at that location. This selecting could be effected, for example, by highlighting the desired key frame and pressing a "play" button on a remote control, or by double-clicking on the desired key frame. Playback of the image sequence is then started at a point in the sequence represented by the selected key frame.

Preferably, the user may position the pointer 230 over one of the key frames shown in the scroll area 201 to select it, and then "drag" the selected key frame to the display area 200. The selecting and dragging can for example be achieved by positioning the crosshair cursor 230 over a key frame, pressing and holding a button on the remote control, and while holding the button on the remote control, moving the pointer to the display area 200, and then releasing the button on the remote control.

Care should be taken to distinguish the selecting action from the actuating action. For example, if the desired key frame is presently occupying the fast forward area 213, then clearly it is undesirable to actuate that key frame, since this would switch the system to the 'fast forward' mode, causing the desired key frame to quickly disappear from view. To prevent this problem, the scroller module 16 could wait a few moments before performing the appropriate action, so that the user has time to signal that he desires to perform the selecting action rather than the actuating action.

If actuation of a key frame is achieved by positioning the pointer 230 over that key frame, then the pressing of a button by itself may be sufficient as a selecting action. If, in addition to positioning the pointer 230 over said key frame, the pressing of a button is required to actuate the key frame, then a repeated pressing of that button can be used to initiate playback of the video stream at that key frame. For example, on computer systems, moving the cursor over a key frame and performing a single click on a button on the mouse actuates that key frame, causing the system to switch to the 'pause' mode, and a double click on a button on the mouse switches the system to the 'playback' mode, starting playback at that key frame.

Alternatively, moving the pointer 230 over a key frame, and subsequently pressing a play button on the remote control may be used as a signal to switch to the 'playback' mode and to initiate playback of the video stream at the location corresponding to that key frame.

The system according to the invention can be embodied as a television receiver, a set-top box, a video recorder, or a computer, loaded with the appropriate software. The system can be realized by means of a computer program, which can be stored on a storage medium such as a floppy disc or CD-ROM, or made available over a network by a file server. The computer program will, when loaded into a programmable device cause a processor in said device to execute the method according to the invention. Thus, the computer program enables a programmable device to function as a system according to the invention.

## Claims

1. A method of selecting a position in an image sequence, comprising
- obtaining a temporally ordered collection (300) of key frames for the image sequence,
- displaying in a scroll area (201) a portion of the collection, the scroll area (201) comprising a playback area (212), a forward area (213) and a backward area (211),
- upon actuation of a current key frame (303) from the collection (300), being a key frame presently occupying the playback area (212), selecting the position in the image sequence as a position represented by the current key frame (303),
- upon actuation of a next key frame (304) from the collection (300), being a key frame presently occupying the forward area (213), scrolling the collection (300) through the scroll area (201) in a forward direction at a first speed, and
- upon actuation of a previous key frame (302) from the collection (300), being a key frame presently occupying the backward area (211), scrolling the collection (300) through the scroll area (201) in a backward direction at a second speed.

2. The method as claimed in claim 1, whereby the scroll area (201) further comprises a fast forward area (214), the method further comprising, upon actuation of a further next key frame (305) from the collection (300), being a key frame presently occupying the fast forward area (214), scrolling the collection (300) through the scroll area (201) in the forward direction at a third speed higher than the first speed.

3. The method as claimed in claim 1, whereby the scroll area (201) further comprises a fast backward area (210), the method further comprising, upon actuation of a further previous key frame (301) from the collection (300), being a key frame presently occupying the fast backward area (210), scrolling the collection (300) through the scroll area (201) in the backward direction at a fourth speed, higher than the second speed.

4. The method as claimed in claim 1, whereby upon selection of a key frame presently occupying one of the backward area (211) and the forward area (213), playback of the image sequence is started at a point in the sequence represented by the selected key frame.

5. The method as claimed in claim 1, further comprising displaying the current key frame (303) in a substantially full-screen fashion.

6. The method as claimed in claim 1, where the image sequence constitutes a video stream.

7. The method as claimed in claim 6, where the collection (300) of key frames is obtained by automatically generating plural key frames from the video stream.

8. A system for selecting a position in an image sequence, comprising
- sequencing means (15) for obtaining a temporally ordered collection (300) of key frames for the image sequence,
- display means (9) for displaying in a scroll area (201) a portion of the collection (300), the scroll area (201) comprising a playback area, a forward area and a backward area,
- current key frame (303) selecting means for upon actuation of a current key frame (303) from the collection (300), being a key frame presently occupying the playback area (212), selecting the position in the image sequence as the current key frame (303), and
- scrolling means for upon actuation of a next key frame (304) from the collection (300), being a key frame presently occupying the forward area (213), scrolling the collection (300) through the scroll area (201) in a forward direction at a first speed, and for upon actuation of a previous key frame (302) from the collection (300), being a key frame presently occupying the backward area (211), scrolling the collection (300) through the scroll area (201) in a backward direction at a second speed.

9. A computer program product enabling a programmable device to function as a system as claimed in claim 8.
